# EUROPEAN PATENT APPLICATION

(11) **EP 4 566 770 A1**
(43) Date of publication of application: **11.06.2025**
(21) Application number: 23850124.1
(22) Date of filing: 02.08.2023
(51) Int. Cl.: B25J 15/08

(54) **HAND**

(30) Priority: 05.08.2022 JP 2022125877
(71) Applicant: KAWASAKI JUKOGYO KABUSHIKI KAISHA, Kobe-shi, Hyogo 650-8670 (JP)
(72) Inventor: MURASE, Yohei, Chuo-ku, Kobe-shi Hyogo 6508670 (JP); FUKUDA, Hiroaki, Chuo-ku, Kobe-shi Hyogo 6508670 (JP); ORYU, Tamami, Chuo-ku, Kobe-shi Hyogo 6508670 (JP); SATO, Eiji, Chuo-ku, Kobe-shi Hyogo 6508670 (JP); WADA. Hisao, Chuo-ku, Kobe-shi Hyogo 6508670 (JP)
(74) Representative: Müller-Boré & Partner Patentanwälte PartG mbB
(86) International application number: PCT/JP2023/028303
(87) International publication number: WO 2024/029570

(57) **Abstract**

A hand 2 includes: a hand body 20; a first finger 3 disposed to the hand body 20; a second finger 5 disposed to the hand body 20; and an advance/retract actuator 4 that advances and retracts the first finger 3 in predetermined first directions Z relative to the hand body independently of the second finger 5. The first finger 3 includes a belt 35 defining a contact surface 35a to contact an article and movable in in-plane directions of the contact surface 35a.

## Description

### FIELD

The technique disclosed here relates to a hand.

### BACKGROUND

A hand known to date includes fingers each with a belt on a contact surface that contacts an article. Patent Document 1, for example, describes a hand including fingers. Each of the fingers includes a bet on a contact surface that contacts an article. When the belt is driven while being in contact with an article, the article moves together with the belt. Accordingly, the article is drawn in the moving direction of the belt.

### CITATION LIST

### PATENT DOCUMENT

Patent Document 1: Japanese Patent Application Publication No. 2016-30316

### SUMMARY

The hand including the fingers with the belts described above can be used not only for simply gripping an article but also for drawing of the article and other applications. However, there remains significant potential for further unitization of such a hand. That is, there is potential for further enhancement of usability of a hand by improving the configuration of the hand.

It is therefore an object of the technique disclosed here to enhance usability of a hand including fingers with belts.

A hand disclosed here includes: a hand body; a first finger disposed to the hand body; a second finger disposed to the hand body; and an advance/retract actuator that advances and retracts the first finger in predetermined first directions relative to the hand body independently of the second finger, wherein the first finger includes a belt defining a contact surface to contact an article and movable in in-plane directions of the contact surface.

The hand disclosed here can enhance usability of the fingers including the belts.

### BRIEF DESCRIPTION OF THE DRAWINGS

[FIG. 1] FIG. 1 is a schematic view illustrating a configuration of a robot system.
[FIG. 2] FIG. 2 is a front view of a hand.
[FIG. 3] FIG. 3 is a perspective view of the hand.
[FIG. 4] FIG. 4 is a bottom view of the hand.
[FIG. 5] FIG. 5 is a cross-sectional view of the hand taken along line V-V in FIG. 4.
[FIG. 6] FIG. 6 is a cross-sectional view of the hand taken along line VI-VI in FIG. 4.
[FIG. 7] FIG. 7 is a cross-sectional view of the hand taken along line VII-VII in FIG. 2.
[FIG. 8] FIG. 8 is a partial cross-sectional view of the hand taken along line VIII-VIII in FIG. 2.
[FIG. 9] FIG. 9 is a cross-sectional view of the hand taken along line IX-IX in FIG. 4.
[FIG. 10] FIG. 10 is a cross-sectional view illustrating the hand in a fully closed state and corresponding to FIG. 5.
[FIG. 11] FIG. 11 is a cross-sectional view illustrating the hand when a lock switches from a locked state to an unlocked state and corresponding to FIG. 6.
[FIG. 12] FIG. 12 is a block diagram schematically illustrating a hardware configuration of a controller.
[FIG. 13] FIG. 13 is a cross-sectional view illustrating the hand for describing an advancing/retracting action and corresponding to FIG. 6.
[FIG. 14] FIG. 14 is a schematic front view of the hand for describing movement when the advancing/retracting action is completed.
[FIG. 15] FIG. 15 is a schematic front view of the hand for describing a gripping action.
[FIG. 16] FIG. 16 is a cross-sectional view illustrating the hand for describing an action of a buffer 8 and corresponding to FIG. 5.
[FIG. 17] FIG. 17 is an illustration of the hand for describing a state when drawing gripping starts.
[FIG. 18] FIG. 18 is an illustration of the hand for describing an intermediate state of drawing gripping.
[FIG. 19] FIG. 19 is an illustration of the hand for describing a state when drawing gripping is completed.
[FIG. 20] FIG. 20 is an illustration for describing an example of drawing of an article W by the hand.
[FIG. 21] FIG. 21 is an illustration for describing another example of drawing of an article W by the hand.

### DESCRIPTION OF EMBODIMENTS

An exemplary embodiment will be described in detail hereinafter with reference to the drawings.

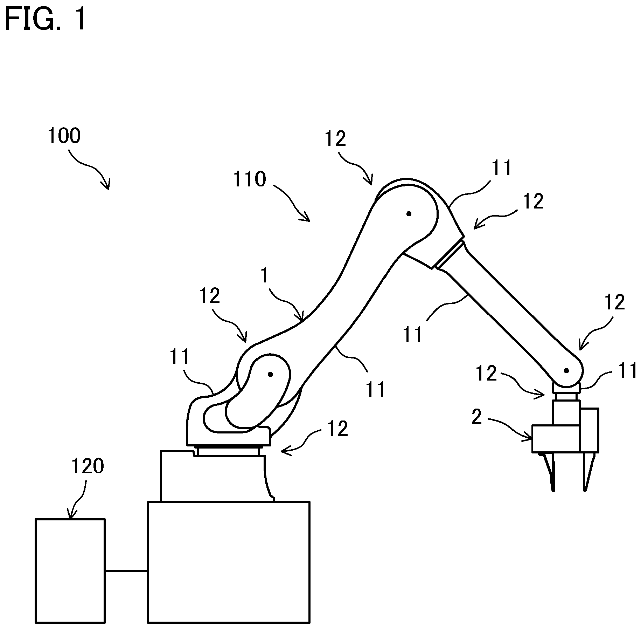

FIG. 1 is a schematic view illustrating a configuration of a robot system 100.

The robot system 100 includes a robot 110 including a robot arm 1 and a hand 2, and a controller 120 that controls the robot 110.

The robot 110 is, for example, an industrial robot. The robot 110 operates, that is, moves the hand 2 by the robot arm 1. The hand 2 is coupled to the robot arm 1, specifically a distal end of the robot arm 1. The hand 2 is a so-called end effector. The hand 2 performs various treatments such as gripping of an article.

The robot arm 1 includes links 11 and joints 12. Each of the joints 12 rotatably connects adjacent two of the links 11. Each of the joints 12 is rotationally driven by an electric motor. The electric motor is, for example, a servo motor. The electric motor includes an encoder that detects a rotation angle of the electric motor.

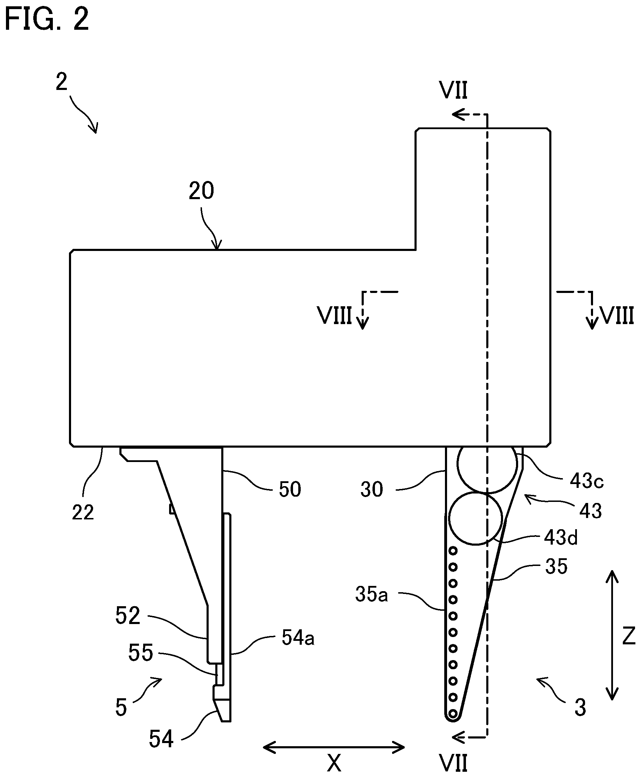

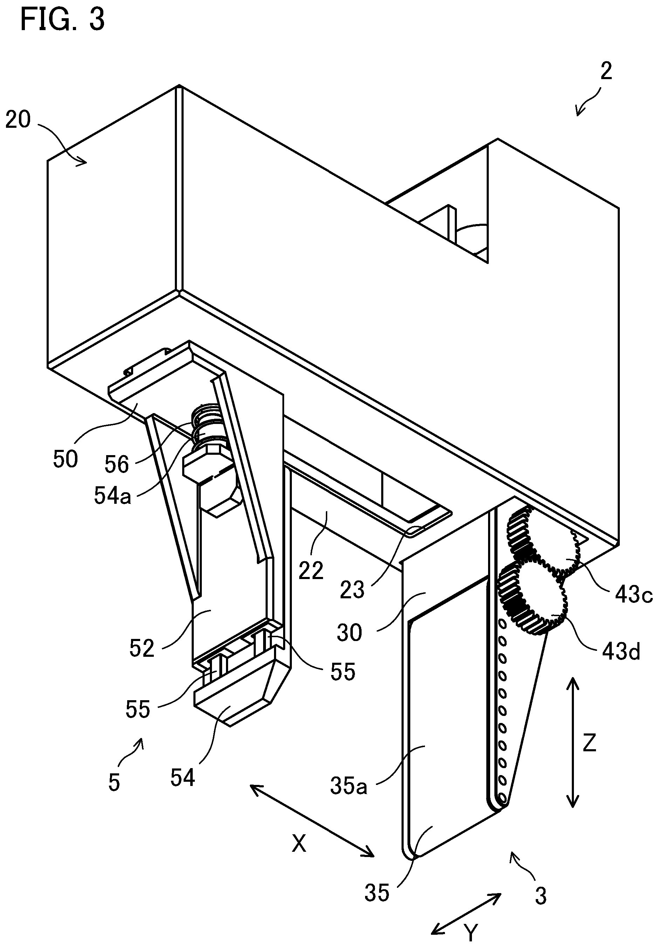

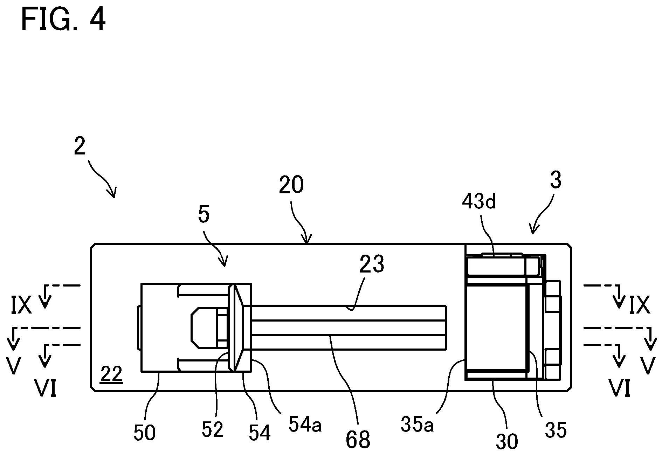

[Hand] FIG. 2 is a front view of the hand 2. FIG. 3 is a perspective view of the hand 2. FIG. 4 is a bottom view of the hand 2. The hand 2 includes a hand body 20, a first finger 3 disposed to the hand body 20, and a second finger 5 disposed to the hand body 20. The first finger 3 is attached to the hand body 20 to be able to advance and retract in first directions Z. The first finger 3 includes a belt 35 defining a contact surface 35a with an article and movable along in-plane directions of the contact surface 35a.

The first finger 3 and the second finger 5 perform opening/closing actions in predetermined second directions X. In this example, the first finger 3 is attached to the hand body 20 to be immovable in the second directions X. The second finger 5 is attached to the hand body 20 to be movable relative to the first finger 3 in the second directions X. That is, the first finger 3 moves forward and backward in the first directions Z, while being immovable in the second directions X. The second finger 5 moves in the second directions X, while being immovable in the first directions Z. The second directions X intersect with the first directions Z, more specifically are substantially orthogonal to the first directions Z.

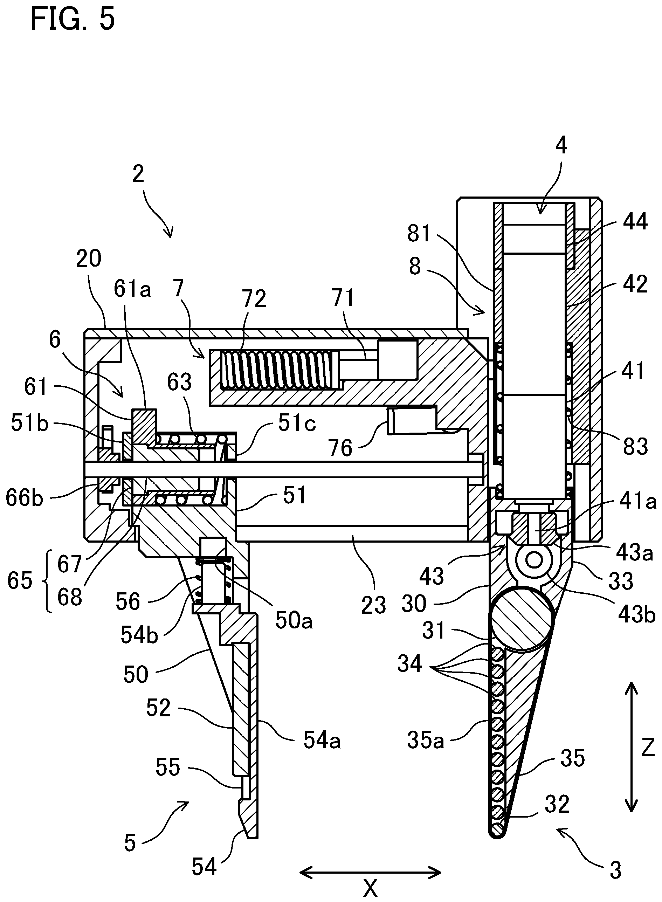

FIG. 5 is a cross-sectional view of the hand 2 taken along line V-V in FIG. 4. The hand 2 further includes an advance/retract actuator 4 that drives the first finger 3. The advance/retract actuator 4 advances and retracts the first finger 3 relative to the hand body 20, independently of the second finger 5.

The hand 2 may further include an opening/closing actuator 6 that drives the second finger 5. The opening/closing actuator 6 moves the second finger 5 in the second directions X relative to the hand body 20. When the second finger 5 moves toward the first finger in the second directions X, the first finger 3 and the second finger 5 are thereby closed. On the other hand, when the second finger 5 moves away from the first finger 3 in the second directions X, the first finger 3 and the second finger 5 are thereby opened.

The hand 2 can perform a gripping action and a moving action. The gripping action is an action of gripping an article with the first finger 3 and the second finger 5. In the gripping action, the hand 2 moves the second finger 5 in the second directions X to thereby grip the article with the first finger 3 and the second finger 5. The moving action is an action of moving an article with the belt 35 of the first finger 3. In the moving action, the hand 2 moves the belt 35 of the first finger 3 with the contact surface 35a of the belt 35 in contact with the article to thereby move the article in the in-plane directions of the contact surface 35a. At this time, the hand 2 may move the first finger 3 in the first directions Z beforehand to cause the first finger 3 to project relative to the second finger 5 in the first directions Z. Accordingly, the first finger 3 can easily approach the article.

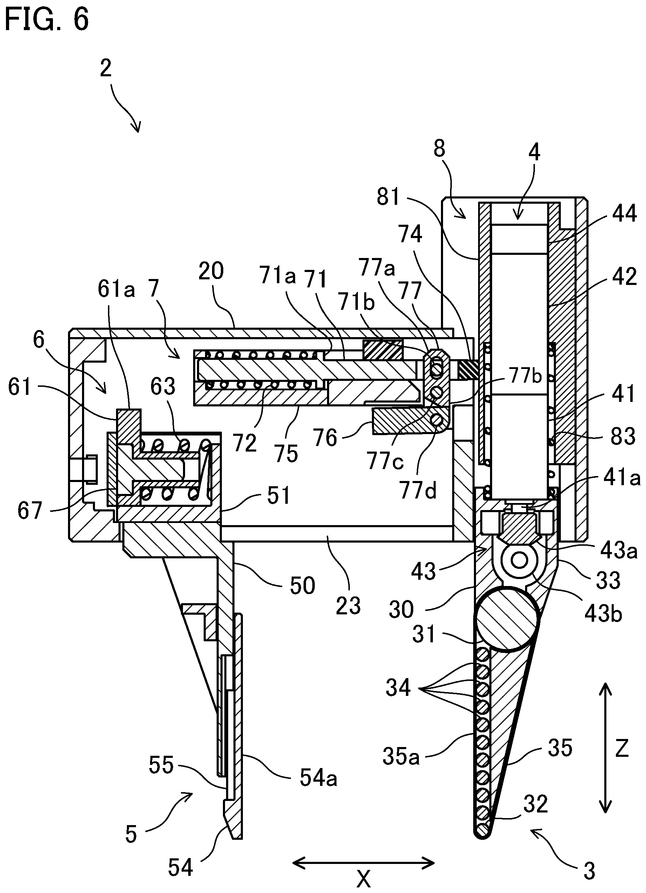

FIG. 6 is a cross-sectional view of the hand 2 taken along line VI-VI in FIG. 4. The hand 2 may further include a lock 7 that switches the first finger 3 between a locked state in which the first finger 3 is immovable in the first directions Z and an unlocked state in which the first finger 3 is movable in the first directions Z. In moving the first finger 3 in the first directions Z, the hand 2 sets the lock 7 in the unlocked state. On the other hand, in performing the gripping action or the moving action, the hand 2 sets the lock 7 in the locked state.

The hand 2 may further include a buffer 8 that elastically supports the first finger 3 such that the first finger 3 is movable in the first directions Z relative to the hand body 20. In performing the gripping action or the moving action, the hand 2 moves in the first directions Z to approach an article or other objects in some cases. Thus, the first finger 3 might contact other objects in the first directions Z. In this case, the buffer 8 absorbs an impact exerted on the first finger 3 so that the first finger 3 can thereby move in the first directions Z.

A configuration of the hand 2 will now be described in detail. For convenience of description, directions orthogonal to both the first directions Z and the second directions X are defined as third directions Y.

### [Hand Body]

As illustrated in FIG. 2, for example, the hand body 20 has a box shape. The hand body 20 supports the first finger 3 and the second finger 5. The hand body 20 houses the advance/retract actuator 4, the opening/closing actuator 6, the lock 7, and the buffer 8.

### [First Finger]

As illustrated in FIGS. 2 and 3, the first finger 3 includes a finger body 30 and the belt 35. The finger body 30 extends generally in the first directions Z from the hand body 20. The finger body 30 is tapered toward the tip in the first directions Z. Specifically, a dimension of the finger body 30 in the second directions X gradually decreases toward the tip of the finger body 30.

For convenience of description, the tip of the first finger 3 or the finger body 30 refers to a tip in the first directions Z. The second directions X will also be referred to as "opening/closing directions X." An inner side in the opening/closing directions X refers to an inner side of the first finger 3 and the second finger 5 in the opening/closing directions X. An outer side in the opening/closing directions X refers to an outer side of the first finger 3 and the second finger 5 in the opening/closing directions X.

As illustrated in FIG. 5, the finger body 30 houses a first timing pulley 31 and a second timing pulley 32. An axis of the first timing pulley 31 and an axis of the second timing pulley 32 extend in the third directions Y. The finger body 30 supports the first timing pulley 31 and the second timing pulley 32 such that each of the first timing pulley 31 and the second timing pulley 32 is rotatable about the axis thereof. The first timing pulley 31 and the second timing pulley 32 are arranged generally in the first directions Z. The second timing pulley 32 is located at the tip of the finger body 30. The first timing pulley 31 is located closer to the hand body 20 than the second timing pulley 32 is.

The belt 35 is an endless belt. The belt 35 is a toothed belt, a so-called timing belt. The belt 35 is wound around the first timing pulley 31 and the second timing pulley 32. As illustrated in FIG. 3, the belt 35 is exposed to the outside from the finger body 30 except for a portion wound around the first timing pulley 31. The belt 35 includes a portion extending between the first timing pulley 31 and the second timing pulley 32 on the inner side in the opening/closing directions X, and a portion extending between the first timing pulley 31 and the second timing pulley 32 on the outer side in the opening/closing directions X. The portion extending between the first timing pulley 31 and the second timing pulley 32 on the inner side in the opening/closing directions X defines the contact surface 35a. The contact surface 35a is a generally flat surface facing the second finger 5 in the opening/closing directions X.

As illustrated in FIG. 5, the finger body 30 includes rollers 34. The axis of each of the rollers 34 extends in the third directions Y. The finger body 30 supports the rollers 34 such that each of the rollers 34 is rotatable about the axis thereof. The rollers 34 are arranged along the first directions Z, more specifically the contact surface 35a, on the inner side of the belt 35. A portion of the belt 35 defining the contact surface 35a contacts the rollers 34 to be thereby maintained in a planar shape.

### [Advance/retract Actuator]

As illustrated in FIGS. 5 and 6, the advance/retract actuator 4 is attached to the finger body 30. The advance/retract actuator 4 drives the belt 35 such that the belt 35 is movable in the in-plane directions of the contact surface 35a. The advance/retract actuator 4 includes a speed reducer 41, an electric motor 42, a transfer 43, and a position acquiring sensor 44. For example, the electric motor 42 is a servo motor. The electric motor 42 and the first finger 3 are arranged in the first directions Z, and a rotation axis M of the electric motor 42 extends in the first directions Z. The position acquiring sensor 44 is included in the electric motor 42 and detects a rotation position of the electric motor 42. The position acquiring sensor 44 is, for example, an encoder or a Hall element sensor. The speed reducer 41 is coupled to the electric motor 42. The speed reducer 41 includes an output shaft 41a, reduces the speed of rotation of the electric motor 42, and outputs the resulting rotation through the output shaft 41a. In a case where the electric motor 42 is a stepping motor, the position acquiring sensor 44 can be omitted. An end portion of the finger body 30 opposite to the tip in the first directions Z has a housing 33. The electric motor 42 is housed in the housing 33 and fixed to the finger body 30. Since the electric motor 42 is located at the side of the first finger 3 in the first directions Z with the rotation axis M extending in the first directions Z, the first finger 3 can be shaped to be slender.

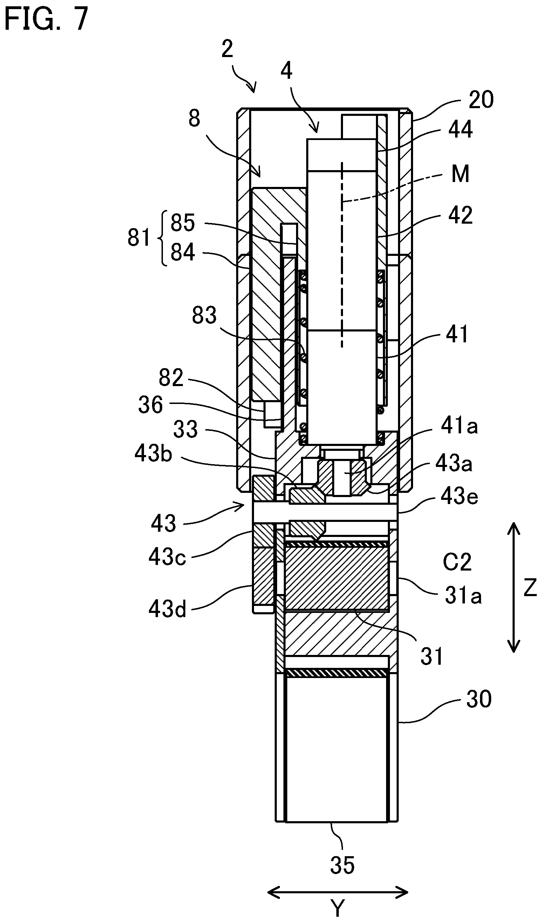

FIG. 7 is a cross-sectional view of the hand 2 taken along line VII-VII in FIG. 2. As illustrated in FIG. 7, the transfer 43 includes a first gear 43a, a second gear 43b, a third gear 43c, a fourth gear 43d, and a rotary shaft 43e. The axis of the rotary shaft 43e extends in the third directions Y. The finger body 30 supports the rotary shaft 43e such that the rotary shaft 43e is rotatable about the axis thereof. The axis of the rotary shaft 43e is substantially orthogonal to the axis of the output shaft 41a of the speed reducer 41. The first gear 43a is non-rotatably attached to the output shaft 41a. The second gear 43b and the third gear 43c are non-rotatably attached to the rotary shaft 43e. The fourth gear 43d is non-rotatably attached to the rotary shaft 31a of the first timing pulley 31. The first gear 43a and the second gear 43b are bevel gears and mesh with each other. The third gear 43c and the fourth gear 43d are spur gears and mesh with each other. The first gear 43a, the second gear 43b, the third gear 43c, and the fourth gear 43d serve as a gear train. When the electric motor 42 is operated, rotation of the output shaft 41a is sequentially transferred to the first gear 43a, the second gear 43b, the third gear 43c, and the fourth gear 43d in this order, and the first timing pulley 31 rotates. When the first timing pulley 31 rotates, the belt 35 wound around the first timing pulley 31 moves. The portion of the belt 35 defining the contact surface 35a moves in the first directions Z. At this time, the second timing pulley 32 rotates in accordance with rotation of the belt 35.

### [Buffer]

The buffer 8 is supported by the hand body 20 to be movable in the first directions Z. The buffer 8 elastically supports the first finger 3 such that the first finger 3 is movable in the first directions Z. As illustrated in FIG. 7, the buffer 8 includes a holder 81 supporting the first finger 3, linear guides 82 that guide the first finger 3 in the first directions Z, and a third spring 83 that elastically absorbs movement of the first finger 3 in the first directions Z. The third spring 83 is an example of a third elastic structure.

The holder 81 includes a side wall 84 and a cover 85. The side wall 84 expands in a plane generally parallel to both the first directions Z and the second directions X, that is, in an ZX plane. The cover 85 has a cylindrical shape that is open downward. The cover 85 surrounds the outer periphery of the speed reducer 41, the electric motor 42, and the position acquiring sensor 44. The cover 85 is not in contact with the speed reducer 41, the electric motor 42, and the position acquiring sensor 44. More specifically, although it is difficult to see in FIG. 7, a slight gap is present between an upper portion of the cover 85 and the electric motor 42 and the position acquiring sensor 44. A gap larger than that on the upper portion of the cover 85 is present between a lower portion of the cover 85 and the speed reducer 41 and the electric motor 42. The upper end of the side wall 84 is coupled to the upper end of the cover 85.

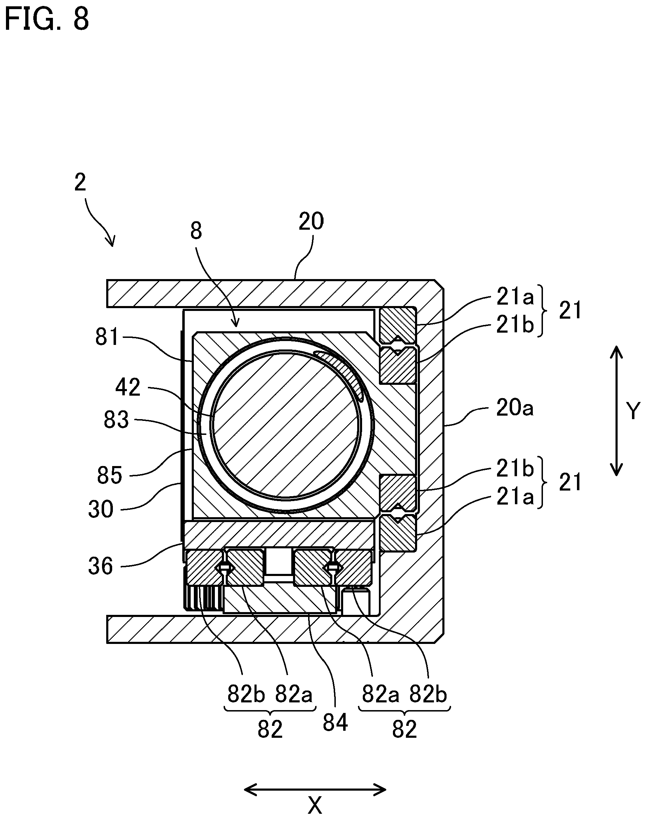

The linear guides 82 couple the holder 81 and the first finger 3 to each other. The linear guides 82 guide the first finger 3 linearly in the first directions Z. That is, the holder 81 supports the first finger 3 through the linear guides 82 such that the first finger 3 is movable in the first directions Z. Movement of the first finger 3 is restricted by stoppers at both ends of the first directions Z. FIG. 8 is a partial cross-sectional view of the hand 2 taken along line VIII-VIII in FIG. 2. As illustrated in FIG. 8, the buffer 8 includes two linear guides 82. Each of the linear guides 82 includes a first rail 82a, a second rail 82b, and balls or rollers located between first rail 82a and the second rail 82b. The first rail 82a and the second rail 82b are movable relative to each other in the first directions Z. The first rail 82a is attached to the side wall 84 of the holder 81, and the second rail 82b is attached to the finger body 30. Specifically, the housing 33 of the finger body 30 includes a side wall 36 expanding generally in parallel with the side wall 84. The second rail 82b is attached to the side wall 36.

The third spring 83 is, for example, a coil spring. The third spring 83 is located between the holder 81 and the finger body 30 while being compressed. Specifically, as illustrated in FIG. 7, the third spring 83 is located between the cover 85 of the holder 81 and the housing 33 of the finger body 30. The third spring 83 surrounds the outer periphery of the electric motor 42. The third spring 83 exerts an elastic force that causes the holder 81 and the finger body 30 to move away from each other in the first directions Z. That is, the first finger 3 is biased by the third spring 83 to a side away from the holder 81 in the first directions Z.

The first finger 3 is located at a position farthest from the holder 81 in the first directions Z by the elastic force of the third spring 83 in normal situations. When an impact is applied to the tip of the first finger 3 toward the hand body 20 in the first directions Z, the first finger 3 moves toward the holder 81 in the first directions Z against an elastic force of the third spring 83. The movement of the first finger 3 is absorbed by the third spring 83. Consequently, the impact applied to the first finger 3 is absorbed by the buffer 8 so that the first finger 3 can thereby move in the first directions Z. Since the third spring 83 surrounds the outer periphery of the electric motor 42, the buffer 8 can be designed compactly.

In the manner described above, the buffer 8 supporting the first finger 3 is supported by the hand body 20 to be movable in the first directions Z. As illustrated in FIG. 8, the hand body 20 includes the linear guides 21 that guide the buffer 8 in the first directions Z.

The linear guides 21 couple the hand body 20 and the buffer 8 to each other. That is, the hand body 20 supports the buffer 8 through the linear guides 21 such that the buffer 8 is movable in the first directions Z. The hand body 20 includes two linear guides 21. Each of the linear guides 21 includes a first rail 21a, a second rail 21b, and balls or rollers located between first rail 21a and the second rail 21b. The first rail 21a and the second rail 21b are movable relative to each other in the first directions Z. The first rail 21a is attached to the hand body 20, and the second rail 21b is attached to the buffer 8. Specifically, the first rail 21a is attached to a first side wall 20a that is a side wall of the hand body 20. The second rail 21b is attached to the holder 81, more specifically the cover 85, of the buffer 8.

**In** the manner described above, the first finger 3 is supported by the hand body 20 through the buffer 8 to be movable in the first directions Z. While the first finger 3 moves in the first directions Z, the advance/retract actuator 4 attached to the finger body 30 also moves in the first directions Z together with the first finger 3. That is, even when first finger 3 moves in the first directions Z, the advance/retract actuator 4 can drive the belt 35.

### [Second Finger]

As illustrated in FIGS. 2, 3, and 5, for example, the second finger 5 includes a finger body 50, a fingertip 54, linear guides 55 that guide the fingertip 54 in the first directions Z, and a spring 56 that elastically absorbs movement of the fingertip 54 in the first directions Z.

The finger body 50 extends from the hand body 20 generally in the first directions Z as a whole. As illustrated in FIG. 2, the hand body 20 includes a bottom wall 22. The bottom wall 22 has a guide hole 23 extending in the first directions Z and penetrating the bottom wall 22. The finger body 50 penetrates the bottom wall 22 through the guide hole 23. As illustrated in FIG. 5, a first end 51 of the finger body 50 in the first directions Z is located inside the hand body 20. The finger body 50 projects downward from the hand body 20 in the first directions Z. A portion of the finger body 50 exposed downward from the hand body 20 includes a support wall 52. The support wall 52 expands in a plane generally parallel to both the first directions Z and the third directions Y, that is, expands in a YZ plane.

The fingertip 54 has a flat plate shape generally parallel to the support wall 52 as a whole. That is, the fingertip 54 extends in the first directions Z. A portion of the fingertip 54 facing the first finger 3 has a contact surface 54a that contacts an article. The contact surface 54a is generally parallel to the contact surface 35a of the first finger 3. A pin 54b is located on an end portion of the fingertip 54 close to the hand body 20 in the first directions Z. The pin 54b extends toward the hand body 20 in the first directions Z, that is, upward. A portion of the finger body 50 facing the pin 54b has a hole 50a that is open downward.

The linear guides 55 couple the finger body 50 and the fingertip 54 to each other. The linear guides 55 guide the fingertip 54 linearly in the first directions Z. That is, the finger body 50 supports the fingertip 54 through the linear guides 55 such that the fingertip 54 is movable in the first directions Z. As illustrated in FIG. 3, the second finger 5 includes two linear guides 55.

The spring 56 is, for example, a coil spring. As illustrated in FIGS. 3 and 5, the spring 56 surrounds the outer periphery of the pin 54b. The spring 56 is located between the finger body 50 and the fingertip 54 while being compressed. The spring 56 exerts an elastic force that causes the finger body 50 and the fingertip 54 to move away from each other in the first directions Z. That is, the fingertip 54 is biased by the spring 56 to a side away from the finger body 50 in the first directions Z. The amount of movement of the fingertip 54 in the first directions Z is restricted by a stopper.

The fingertip 54 is located at a position farthest from the finger body 50 in the first directions Z by the elastic force of the spring 56 in normal situations. When an impact is applied to the tip of the fingertip 54 toward the hand body 20 in the first directions Z, the fingertip 54 moves toward the finger body 50 in the first directions Z against the elastic force of the spring 56. At this time, the pin 54b enters the hole 50a of the finger body 50 and does not interfere with the finger body 50. Movement of the fingertip 54 is absorbed by the spring 56. Consequently, the impact applied to the fingertip 54 is absorbed by the spring 56 so that the second finger 5 can thereby move in the first directions Z.

### [Opening/closing Actuator]

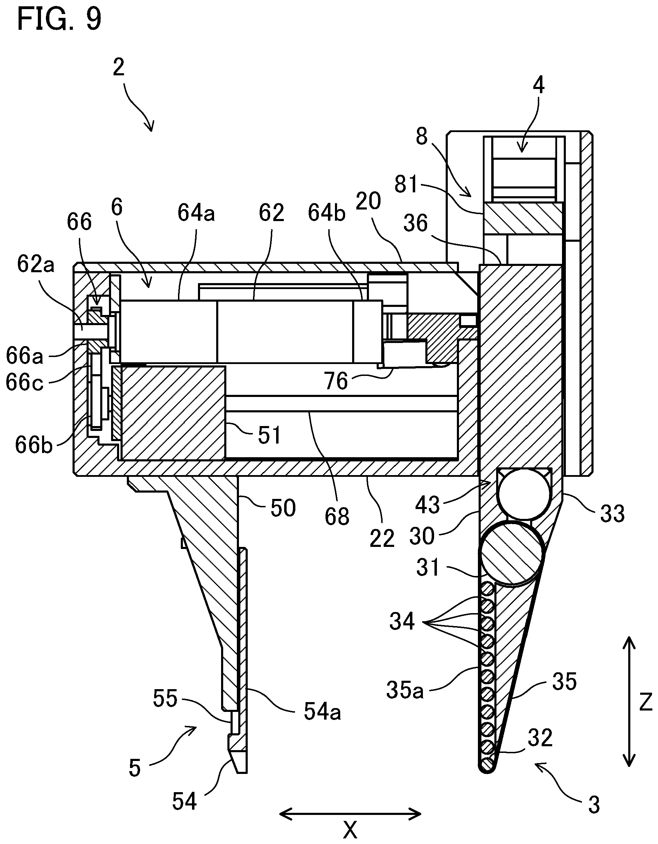

FIG. 9 is a cross-sectional view of the hand 2 taken along line IX-IX in FIG. 4. As illustrated in FIGS. 5, 6, and 9, the opening/closing actuator 6 further includes a mover 61 that moves in conjunction with the second finger 5. Specifically, the opening/closing actuator 6 further includes an electric motor 62 that moves the mover 61, and a second spring 63 that electrically couples the mover 61 and the second finger 5 to each other. The opening/closing actuator 6 moves the mover 61 by the electric motor 62 to thereby move the second finger 5 in the opening/closing directions X. The opening/closing actuator 6 further includes a speed reducer 64a, a position acquiring sensor 64b, a feed screw 65, and a transfer 66. The electric motor 62 is an example of a driving source, and the second spring 63 is an example of a second elastic structure.

As illustrated in FIG. 5, the feed screw 65 includes a nut 67 and a screw shaft 68 to which the nut 67 is screwed. The nut 67 is attached to the mover 61 as one unit. The electric motor 62 rotationally drives the screw shaft 68 to move the mover 61 together with the nut 67 in the axial directions of the screw shaft 68. When the mover 61 moves in the axial directions of the screw shaft 68, the second finger 5 coupled to the mover 61 through the second spring 63 thereby moves in the opening/closing directions X.

Specifically, the axis of the screw shaft 68 extends in the opening/closing directions X. That is, the axial directions of the screw shaft 68 coincide with the opening/closing directions X. The hand body 20 supports the screw shaft 68 such that the screw shaft 68 is rotatable about the axis thereof. The first end 51 of the finger body 50 includes a first side wall 51b and a second side wall 51c arranged in the second directions X. The second side wall 51c is located inward of the first side wall 51b in the opening/closing directions X, that is, closer to the first finger 3. The screw shaft 68 penetrates the first end 51, specifically the first side wall 51b and the second side wall 51c.

The nut 67 is fixed to the inner side of the mover 61. The mover 61 and the nut 67 are housed in the first end 51 of the finger body 50. Specifically, the mover 61 and the nut 67 are located between the first side wall 51b and the second side wall 51c. The mover 61 is stopped by the first end 51 to be non-rotatable about the axis of the screw shaft 68. The mover 61 includes an arm 61a projecting outward from the first end 51.

The second spring 63 is housed in the first end 51. The second spring 63 is located between the mover 61 and the second side wall 51c while being compressed. Accordingly, the second spring 63 pushes the mover 61 against the first side wall 51b. In other words, the second spring 63 pushes the second finger 5 inward in the opening/closing directions X relative to the mover 61.

The electric motor 62 is, for example, a servo motor. As illustrated in FIG. 9, the electric motor 62 is located such that the output shaft 62a extends in the opening/closing directions X. The position acquiring sensor 64b is included in the electric motor 62 and detects a rotation position of the electric motor 62. The position acquiring sensor 64b is, for example, an encoder or a Hall element sensor. In a case where the electric motor 62 is a stepping motor, the position acquiring sensor 64b can be omitted. The speed reducer 64a, the electric motor 62, and the position acquiring sensor 64b are housed in the hand body 20 and fixed to the hand body 20.

The transfer 66 includes a first timing pulley 66a, a second timing pulley 66b, and a timing belt 66c. The first timing pulley 66a is non-rotatably attached to the output shaft 62a. The second timing pulley 66b is non-rotatably attached to the screw shaft 68. The first timing pulley 66a and the second timing pulley 66b are located substantially at the same position in the opening/closing directions X. The timing belt 66c are wound around the first timing pulley 66a and the second timing pulley 66b. When the electric motor 62 is operated, the first timing pulley 66a rotates together with the output shaft 62a. When the first timing pulley 66a rotates, the second timing pulley 66b rotates through the timing belt 66c, and the screw shaft 68 rotates together with the second timing pulley 66b. In this manner, a driving force of the electric motor 62 is transferred to the feed screw 65 through the transfer 66.

The opening/closing actuator 6 operates the electric motor 62 to thereby move the second finger 5 in the opening/closing directions X to be opened and closed. At this time, the mover 61 moves in conjunction with the second finger 5. Specifically, a rotation driving force of the electric motor 62 is transferred to the screw shaft 68 through the transfer 66. When the screw shaft 68 rotates, the mover 61 moves in the axial direction of the screw shaft 68, that is, in the opening/closing directions X, together with the nut 67. Since the second finger 5 is coupled to the mover 61 through the second spring 63, the second finger 5 moves in the opening/closing directions X in accordance with the mover 61. At this time, the side to which the second finger 5 moves in the opening/closing directions X depends on the side to which the electric motor 62 rotates. By switching the side to which the electric motor 62 rotates, the second finger 5 is switched between opening and closing.

In opening the second finger 5, the mover 61 directly pushes the second finger 5 toward an opening side of the second finger 5 opens in the opening/closing directions X. On the other hand, in closing the second finger 5, the mover 61 pushes the second finger 5 through the second spring 63 toward a closing side of the second finger 5 in the opening/closing directions X. When the second finger 5 moves toward the closing side to contact the first finger 3, the second finger 5 becomes immovable in the opening/closing directions X. However, the mover 61 can continue to move even after the second finger 5 has been fully closed. Even after the second finger 5 has become immovable, the mover 61 can move toward the closing side in the opening/closing directions X by elastically deforming the second spring 63.

In a case where an article is gripped with the first finger 3 and the second finger 5 and the second finger 5 thereby becomes immovable in the opening/closing directions X, the mover 61 can also continue to move. This independent movement of the mover 61 increases an elastic force of the second spring 63. With the increased elastic force of the second spring 63, a gripping force of the first finger 3 and the second finger 5 occurs. In this manner, the opening/closing actuator 6 can also increase the gripping force by further moving the mover 61 to elastically deform the second spring 63 after bringing the second finger 5 into contact with an article.

### [Lock]

As illustrated in FIG. 6, the lock 7 includes a stopper 71 movable between a first position at which the stopper 71 locks the first finger 3 to bring the first finger 3 into a locked state and a second position at which the stopper 71 unlocks the first finger 3 to bring the first finger 3 into an unlocked state, and a first spring 72 that biases the stopper 71 from the second position toward the first position. The stopper 71 in FIG. 6 is located at the first position. The first spring 72 is an example of a first elastic structure.

The stopper 71 has a rod shape. A rubber contact 74 is located on a first end portion of the stopper 71 that is an end portion in the longitudinal directions. An intermediate portion of the stopper 71 in the longitudinal directions includes a flange 71a. The stopper 71 is supported by the holder 75 housed in the hand body 20 to be movable in the opening/closing directions X. The stopper 71 is supported by the holder 75 in a state where the axis of the stopper 71 extends in the opening/closing directions X and the contact 74 faces the buffer 8. Specifically, the contact 74 faces the holder 81 of the buffer 8.

The first position of the stopper 71 is a position of the stopper 71 at which the contact 74 is in contact with the holder 81 of the buffer 8. The second position of the stopper 71 is a position at which the contact 74 is separated from the holder 81, that is, a position at which the contact 74 is not in contact with the holder 81, in the opening/closing directions X.

The first spring 72 covers the outer periphery of a second end portion of the stopper 71 that is an end portion opposite to the contact 74, and is located in the holder 75 while being compressed. The first spring 72 pushes the flange 71a of the stopper 71 toward the buffer 8 in the opening/closing directions X. The stopper 71 is biased by the first spring 72 in the opening/closing directions X so that the stopper 71 thereby pushes the contact 74 against the holder 81 of the buffer 8 at the first position to lock the buffer 8.

The lock 7 may further include a lever 76 coupled to the stopper 71 and located on a movement trajectory of the mover 61. Specifically, the lever 76 is coupled to the stopper 71 through a link 77. The link 77 includes a first end portion 77a and a second end portion 77b. An intermediate portion of the link 77 between the first end portion 77a and the second end portion 77b is attached to the holder 75 through a pin 77c. The link 77 is rotatable about the pin 77c relative to the holder 75. A pin 71b is located on a portion of the stopper 71 between the contact 74 and the flange 71a. The pin 71b is inserted in an elongated hole in the first end portion 77a of the link 77. In this manner, the first end portion 77a of the link 77 is coupled to the stopper 71. The lever 76 is attached to the second end portion 77b of the link 77 through a pin 77d. The lever 76 extends in a bending direction from the link 77. For example, the lever 76 extends from the second end portion 77b of the link 77 toward the mover 61 generally in the opening/closing directions X2. The lever 76 is rotatable about the pin 77d relative to the link 77. The rotation range of the lever 76 is restricted by the link 77. Accordingly, the lever 76 is maintained in the state of extending in the bending direction from the link 77.

A distal end of the lever 76, that is, an end opposite to the link 77, is located on the movement trajectory of the mover 61. Specifically, the distal end of the lever 76 is located on the movement trajectory of the mover 61 from when the first finger 3 and the second finger 5 become fully closed to when the second spring 63 is elastically deformed. More specifically, the distal end of the lever 76 is located at a position at which the distal end contacts the arm 61a of the mover 61 when the first finger 3 and the second finger 5 become fully closed and the gripping force of the first finger 3 and the second finger 5 increases to a predetermined threshold.

In the thus-configured lock 7, in a case where the first finger 3 and the second finger 5 are open as illustrated in FIG. 6, the arm 61a of the mover 61 is not in contact with the lever 76. At this time, the stopper 71 is located at the first position by an elastic force of the first spring 72. The contact 74 of the stopper 71 is pushed against the holder 81 of the buffer 8 with a force in accordance with the elastic force of the first spring 72. The buffer 8 enters the state where the buffer 8 is immovable in the first directions Z relative to the hand body 20. Since the first finger 3 is supported by the hand body 20 through the buffer 8, movement of the first finger 3 in the first directions Z is also locked. This state is a locked state of the lock 7. It should be noted that although the buffer 8 is immovable with respect to the hand body 20, the first finger 3 is still movable with respect to the buffer 8. That is, even in the locked state of the lock 7, the first finger 3 can also move in the first directions Z in a range where the first finger 3 is movable relative to the buffer 8.

Switching of the lock 7 between the locked state and the unlocked state is performed by the opening/closing actuator 6. In moving the second finger 5 toward the first finger 3 in the opening/closing directions X, the opening/closing actuator 6 moves the stopper 71 from the first position toward the second position against an elastic force of the first spring 72 to thereby switch the lock 7 to the unlocked state. The opening/closing actuator 6 causes the second finger 5 to be fully closed, more specifically, moves the second finger 5 in the opening/closing directions X such that the second finger 5 approaches the first finger 3 to bring the second finger 5 into contact with the first finger 3 and then further moves the mover 61, thereby switching the lock 7 to the unlocked state.

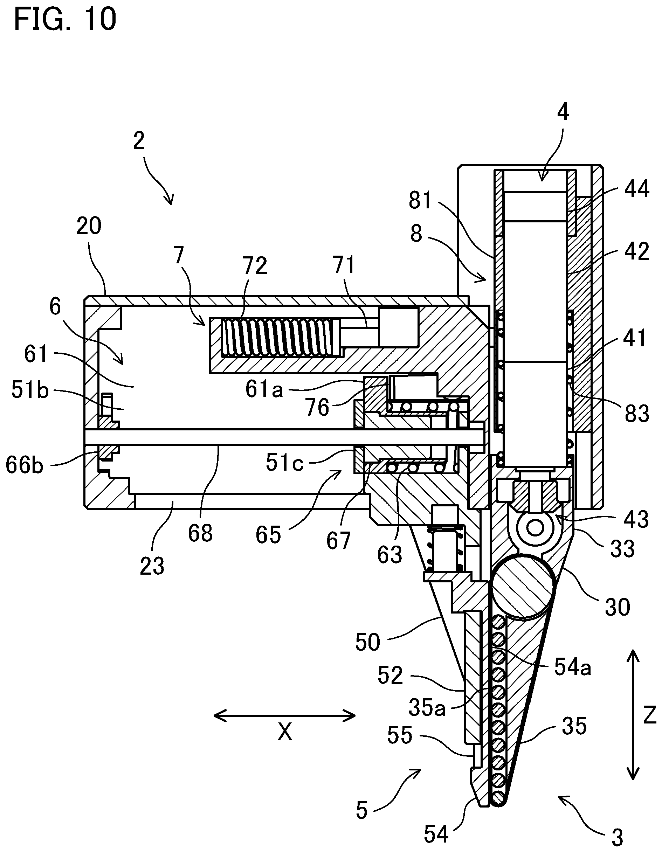

Specifically, the electric motor 62 moves the mover 61 so that the second finger 5 thereby moves in the opening/closing directions X. When the mover 61 moves toward a closing side of the second finger 5 in the opening/closing directions X, the second finger 5 also moves toward the closing side together with the mover 61. Accordingly, the arm 61a approaches the lever 76. When the second finger 5 contacts the first finger 3, the second finger 5 cannot move any more in the opening/closing directions X. FIG. 10 is a cross-sectional view illustrating the hand 2 in a fully closed state and corresponding to FIG. 5. At the time when the first finger 3 and the second finger 5 become fully closed, the arm 61a is not in contact with the lever 76 yet.

After the second finger 5 has contacted the first finger 3, the mover 61 can still move by elastically deforming the second spring 63. When the mover 61 further moves toward the closing side from the fully closed state of the first finger 3 and the second finger 5, the arm 61a then contacts the lever 76 and pushes the lever 76 toward the closing side in the opening/closing directions X. That is, the opening/closing actuator 6 moves the stopper 71 by the mover 61 from the first position toward the second position against an elastic force of the first spring 72. At this time, the second finger 5 is in contact with the first finger 3 and stopped, and only the mover 61 moves.

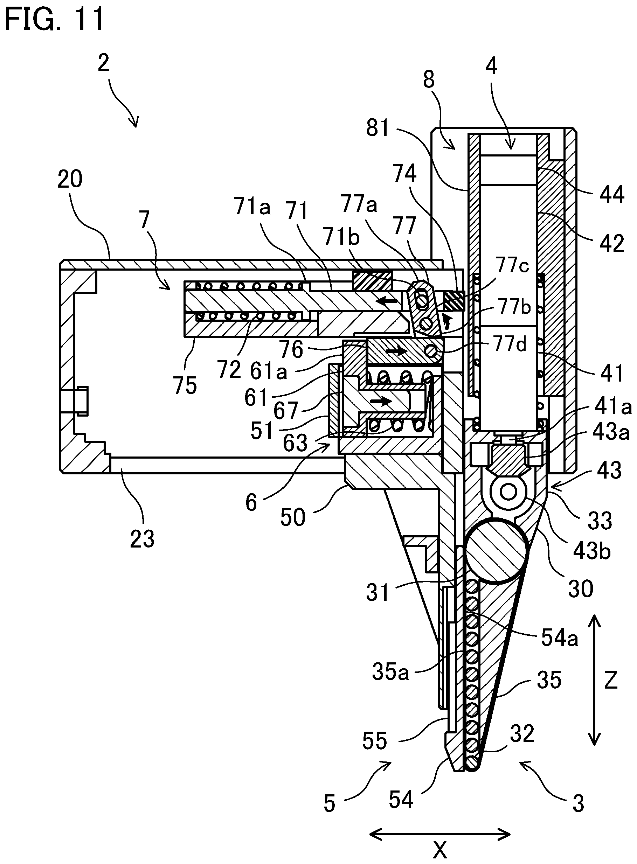

FIG. 11 is a cross-sectional view illustrating the hand 2 when the lock 7 switches from the locked state to the unlocked state and corresponding to FIG. 6. The link 77 rotates about the pin 77c such that the second end portion 77b of the link 77 moves generally toward the closing side in the opening/closing directions X by movement of the lever 76 toward the closing side in the opening/closing directions X. Consequently, the first end portion 77a of the link 77 moves generally toward the opening side in the opening/closing directions X, and accordingly, the stopper 71 moves to a side away from the buffer 8 in the opening/closing directions X against the elastic force of the first spring 72. In this manner, the stopper 71 moves from the first position to the second position.

In a case where the stopper 71 is located at the second position, the contact 74 is not in contact with the holder 81 of the buffer 8, and the buffer 8 is unlocked from the stopper 71. Accordingly, the buffer 8 becomes movable in the first directions Z relative to the hand body 20. Since the first finger 3 is supported by the hand body 20 through the buffer 8, the first finger 3 can also move in the first directions Z. This state is the unlocked state of the lock 7.

### [Controller]

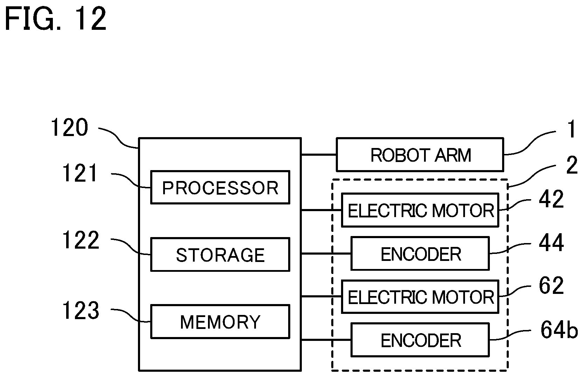

FIG. 12 schematically illustrates a hardware configuration of the controller 120. The controller 120 includes a processor 121, a storage 122, and a memory 123.

The processor 121 controls the entire controller 120. The controller 121 performs various computations. For example, the controller 121 is a processor such as a central processing unit (CPU). The processor 121 may be a micro controller unit (MCU), a micro processor unit (MPU), a field programmable gate array (FPGA), a programmable logic controller (PLC), system LSI, or the like.

The storage 122 stores programs and various types of data to be executed by the controller 121. For example, the storage 122 stores a control program. The storage 122 is a nonvolatile memory, a hard disc drive (HDD), or a solid state drive (SSD), for example. The memory 123 temporarily stores data and the like. The memory 123 is, for example, a volatile memory.

The processor 121 performs various functions of the controller 120 by reading and developing programs from the storage 122 to the memory 123.

The processor 121 controls electric motors of the robot arm 1 to thereby control actions of the robot arm 1. The processor 121 controls each electric motor based on a detection result of an encoder of the robot arm 1. The processor 121 also controls actions of the hand 2 by controlling the advance/retract actuator 4 and the opening/closing actuator 6. Specifically, the processor 121 controls the electric motor 42 based on a detection result of the position acquiring sensor 44 to thereby drive the belt 35. The processor 121 causes the hand 2 to perform any of movement of an article and advancement/retraction of the first finger 3 by driving the belt 35. The processor 121 controls the electric motor 62 based on a detection result of the position acquiring sensor 64b to thereby move the second finger 5 in the opening/closing directions X.

### [Action of Hand]

The thus-configured hand 2 is controlled by the controller 120, and performs a gripping action of gripping an article with the first finger 3 and the second finger 5 and a moving action of moving an article with the belt 35 of the first finger 3. The hand 2 also performs an advancing/retracting action of advancing or retracting the first finger 3 in the first directions Z. The hand 2 adjusts the position of the first finger 3 in the first directions Z through the advancing/retracting action.

### [Advancing/Retracting Action]

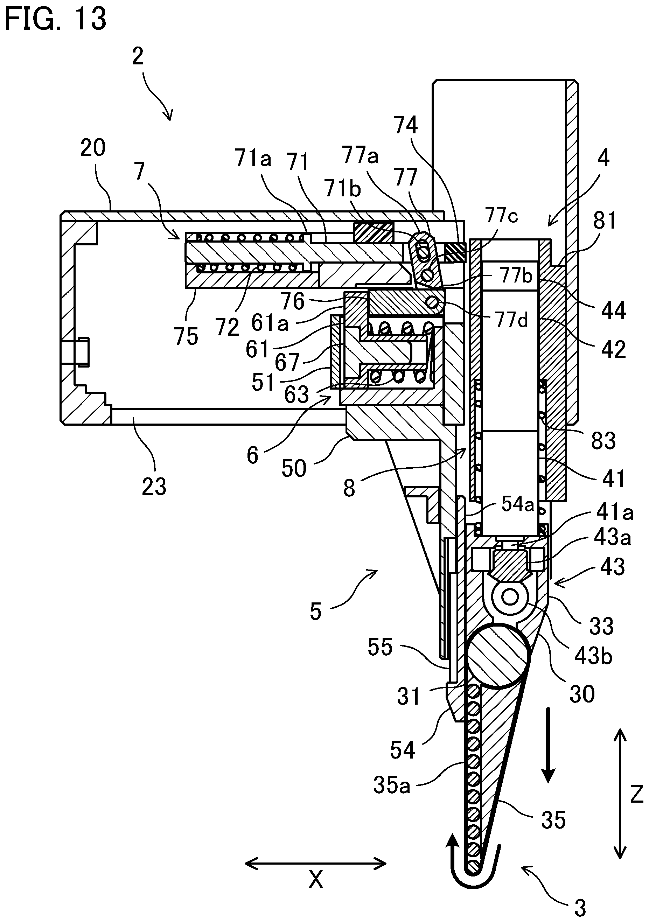

First, an advancing/retracting action of the hand 2 will be described. FIG. 13 is a cross-sectional view illustrating the hand 2 for describing an advancing/retracting action and corresponding to FIG. 6. In the hand 2, the advance/retract actuator 4 advances and retracts the first finger 3. The advance/retract actuator 4 drives the belt 35 as described above. Movement of the belt 35 is used for advancing and retracting the first finger 3 and moving an article. That is, the advance/retract actuator 4 selectively performs the function of advancing and retracting the first finger 3 (hereinafter referred to as an "advancing/retracting function") and the function of moving an article (hereinafter referred to as a "moving function"). The advancing/retracting function and the moving function of the advance/retract actuator 4 are switched by the lock 7. In a case where the lock 7 is in the unlocked state, the advance/retract actuator 4 performs the advancing/retracting function, whereas in a case where the lock 7 is in the locked state, the advance/retract actuator 4 performs the moving function.

Specifically, in performing the advancing/retracting action, the hand 2 sets the lock 7 in the unlocked state so that the first finger 3 can move in the first directions Z. In addition, the hand 2 brings the belt 35 of the first finger 3 into contact with another object. In this state, the hand 2 causes the advance/retract actuator 4 to drive the belt 35, thereby performing the advancing/retracting action.

As described above, while the lock 7 is in the unlocked state, the belt 35 is in contact with the second finger 5. That is, in advancing or retracting the first finger 3, the second finger 5 functions as an object that contacts the belt 35. In this state, the advance/retract actuator 4 operates the electric motor 42 to thereby drive the belt 35. When the belt 35 is driven, the portion of the belt 35 defining the contact surface 35a moves relative to the finger body 30 in the in-plane directions of the contact surface 35a. The portion of the belt 35 defining the contact surface 35a is in contact with the second finger 5. A friction force occurs between the contact surface 35a and the second finger 5. Thus, even when the belt 35 is driven, the belt 35 does not slide relative to the second finger 5, or sliding of the belt 35 relative to the second finger 5 is reduced, and instead, as illustrated in FIG. 13, the finger body 30 moves in the first directions Z relative to the second finger 5. That is, the first finger 3 moves in the first directions Z relative to the second finger 5. When the first finger 3 reaches a desired position in the first directions Z, the advance/retract actuator 4 stops the electric motor 42 and stops advancing/retracting of the first finger 3.

The first finger 3 is switched between advancing and retracting relative to the hand body 20 by switching the side to which the electric motor 42 rotates. The position of the first finger 3 in the first directions Z is adjusted depending on circumstances in which the gripping action or the moving action is performed. In the gripping action, basically, the position of the first finger 3 in the first directions Z coincides with the position of the second finger 5. In the moving action, the first finger 3 projects from the second finger 5 in the first directions Z.

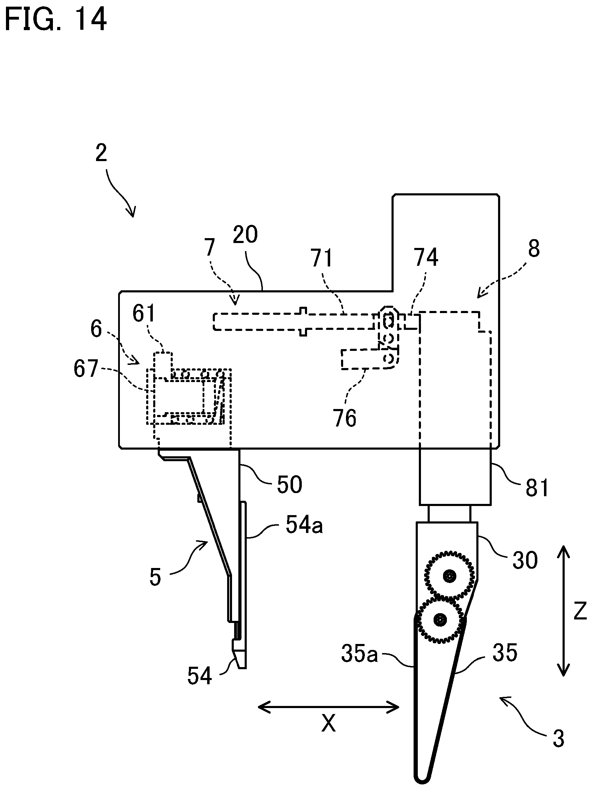

FIG. 14 is a schematic front view of the hand 2 for describing movement when the advancing/retracting action is completed. After the position of the first finger 3 in the first directions Z has been adjusted by the advancing/retracting action, when the opening/closing actuator 6 moves the mover 61 to a side away from the first finger 3 in the opening/closing directions X, contact between the mover 61 and the lever 76 is cancelled as illustrated in FIG. 14. Accordingly, the stopper 71 moves to the first position as an elastic force of the first spring 72, and the contact 74 is brought into contact with the holder 81 of the buffer 8. In this manner, the lock 7 switches from the unlocked state to the locked state.

### [Gripping Action]

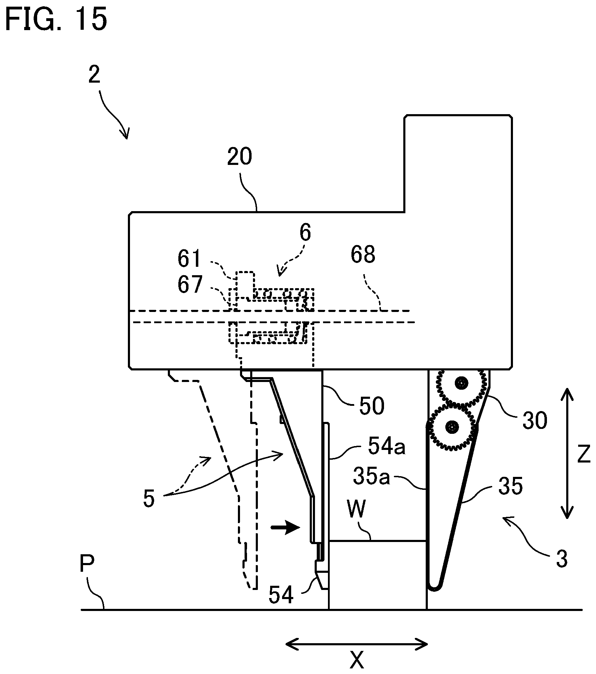

A gripping action of the hand 2 will now be described. FIG. 15 is a schematic front view of the hand 2 for describing a gripping action. In performing a gripping action, the hand 2 basically adjusts the position of the first finger 3 in the first directions Z such that the fingertips of the first finger 3 and the second finger 5 generally coincide with each other in the first directions Z. In addition, as indicated by chain double-dashed lines in FIG. 15, the hand 2 is previously set in a state where the second finger 5 is separated from the first finger 3 in the second directions X, that is, a state where the first finger 3 and the second finger 5 are open. In some situation of use, the fingertips of the first finger 3 and the second finger 5 may not coincide with each other in the first directions Z.

In general, the robot arm 1 moves the hand 2 such that the first finger 3 and the second finger 5 approach the plane P on which an article W is placed (hereinafter referred to as a "support surface") in the first directions Z. The hand 2 is moved such that the article W is positioned between the first finger 3 and the second finger 5. Then, the hand 2 moves the second finger 5 toward the first finger 3 in the opening/closing actuator 6. The opening/closing actuator 6 operates the electric motor 62 to a side corresponding to a closing action of the second finger 5. Rotation of the electric motor 62 causes the second finger 5 toward a closing side in the opening/closing directions X together with the mover 61 and the nut 67. Thereafter, the second finger 5 is brought into contact with the article W and pushes the article W toward the closing side until the article W contacts the first finger 3. Lastly, the first finger 3 and the second finger 5 grasp the article W on the contact surface 35a and the contact surface 54a. In the gripping action, the advance/retract actuator 4 does not operate, and the belt 35 of the first finger 3 does not move.

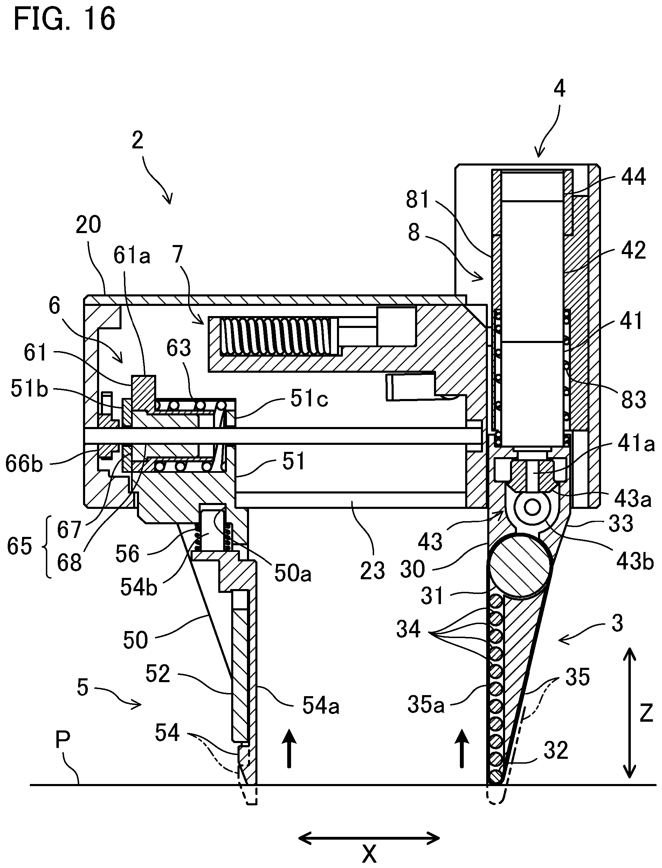

FIG. 16 is a cross-sectional view illustrating the hand 2 for describing an action of the buffer 8 and corresponding to FIG. 5. As described above, when the first finger 3 and the second finger 5 approach the support surface P or another object such as the article W, the tip of the first finger 3 or the second finger 5 can contact the support surface P or other objects in some cases. Since the first finger 3 is elastically supported by the buffer 8, the first finger 3 can retract toward the hand body 20 in the first directions Z. An impact exerted on the first finger 3 from the support surface P or other objects is absorbed by the third spring 83 of the buffer 8 by movement of the first finger 3 in the first directions Z. Since the fingertip 54 of the second finger 5 is elastically supported by the finger body 50 through the spring 56, the fingertip 54 can retract toward the hand body 20 in the first directions Z. An impact exerted on the second finger 5 from the support surface P or other objects is absorbed by the spring 56 by movement of the fingertip 54 in the first directions Z. In this manner, any of the first finger 3 and the second finger 5 can absorb an impact in the first directions Z.

### [Moving Action]

A moving action of the hand 2 will now be described. In performing a moving action, the hand 2 sets the lock 7 in the locked state to allow the advance/retract actuator 4 to perform the moving function. For example, as illustrated in FIG. 14, the hand 2 previously separates the second finger 5 from the first finger 3 in the opening/closing directions X. In this state, the advance/retract actuator 4 drives the belt 35. Since the first finger 3 is immovable in the first directions Z, the portion of the belt 35 defining the contact surface 35a moves in the first directions Z. In a case where an article is in contact with the contact surface 35a and a friction force is exerted between the contact surface 35a and the article, the article moves in the first directions Z together with the contact surface 35a. The hand 2 switches the side to which the article moves depending on the side to which the electric motor 42 of the advance/retract actuator 4 rotates.

In the moving action, the article does not need to be gripped with the first finger 3 and the second finger 5, and the article can be moved only with the first finger 3. Accordingly, even in a situation where space surrounding the article is narrow so that it is difficult to move fingers to the vicinity of the article or the article cannot be gripped on both sides, the article can be moved by bringing only the first finger 3 into contact with the article. In addition, as illustrated in FIG. 14, since the fingertip of the first finger 3 projects relative to the fingertip of the second finger 5 in the first directions Z, the first finger 3 can easily enter narrow space and easily reach the article.

### [Drawing Gripping]

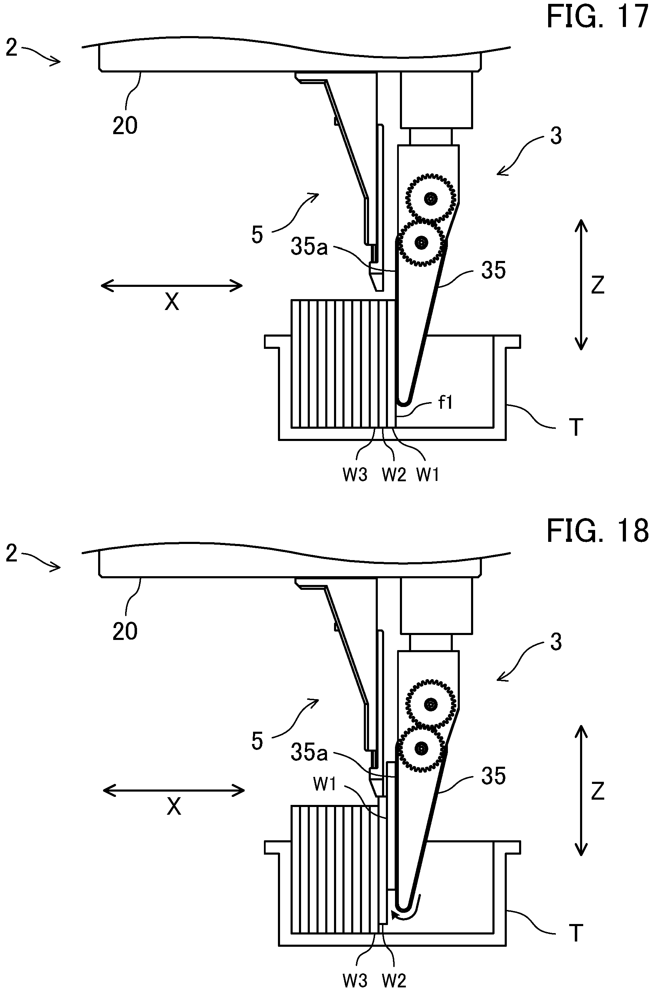

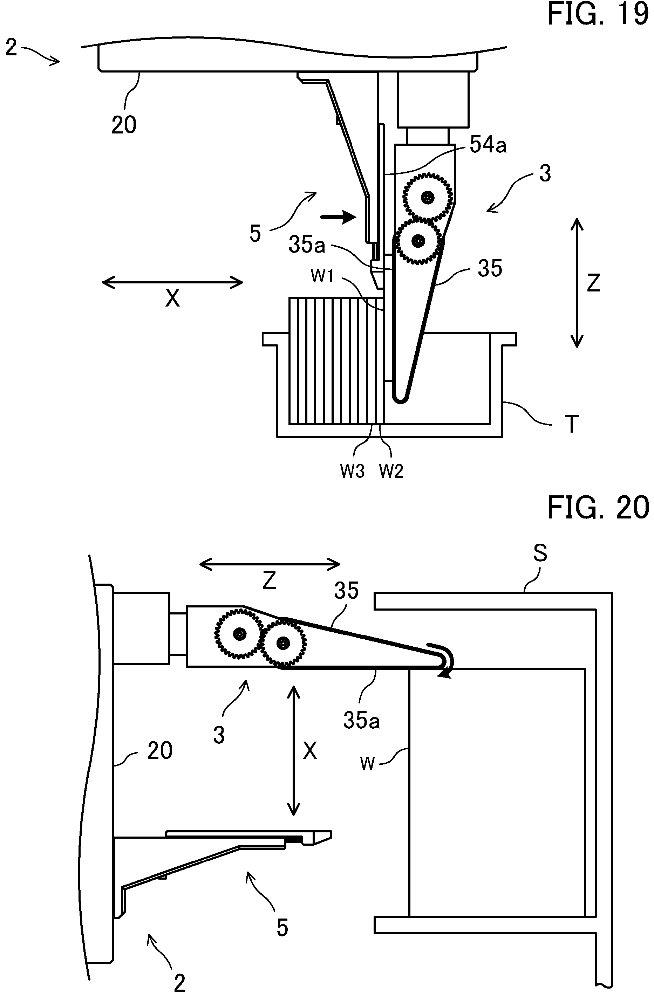

A specific example of the moving action will now be described. First, description will be given on drawing gripping in which an article is first drawn to a gap between the first finger 3 and the second finger 5 and then gripped with the first finger 3 and the second finger 5. FIG. 17 is an illustration of the hand 2 for describing a state when drawing gripping starts. FIG. 18 is an illustration of the hand 2 for describing an intermediate state of drawing gripping. FIG. 19 is an illustration of the hand 2 for describing a state when drawing gripping is completed. In the drawing gripping shown in FIGS. 17, 18, and 19, one of stacked plate-shaped articles W is drawn and gripped by the hand 2.

For example, plate-shaped articles W in the standing state are stacked and housed in a tray T. In drawing gripping, an outermost one of the articles W in the stacking direction is taken out. For convenience of description, the articles W will be referred to as a first article W1, a second article W2, a third article W3, ..., in this order from the outer side.

As illustrated in FIG. 17, the hand 2 is in a state where the first finger 3 previously projects relative to the second finger 5 in the first directions Z by a predetermined distance and a distance between the first finger 3 and the second finger 5 in the opening/closing directions X is slightly larger than the thickness of the article W. In this state, the hand 2 is moved to a position at which the first finger 3 contacts the first article W1. Specifically, the contact surface 35a of the first finger 3 contacts a surface of the first article W1 exposed to the outside in the stacking directions (hereinafter this surface will be referred to as an "outermost surface f1"). The second finger 5 is located at a position at which the second finger 5 is not in contact with an end surface of the second article W2.

The hand 2 operates the advance/retract actuator 4 to drive the belt 35. At this time, since the lock 7 is in the locked state, the advance/retract actuator 4 performs the moving function. When the belt 35 is driven in this state, the portion of the belt 35 defining the contact surface 35a moves in the in-plane directions of the contact surface 35a. Accordingly, the first article W1 in contact with the belt 35 also moves together with the belt 35. The side to which the electric motor 42 rotates is set such that the portion of the belt 35 defining the contact surface 35a approaches the hand body 20 in the first directions Z, that is, upward in the drawing. As a result, the first article W1 is drawn to a gap between the first finger 3 and the second finger 5.

As illustrated in FIG. 18, when the first article W1 has been drawn to the gap between the first finger 3 and the second finger 5, the advance/retract actuator 4 stops driving of the belt 35. At this time, the second article W2 moves in the first directions Z together with the first article W1 with a friction force between the first article W1 and the second article W2 in some cases. However, the second finger 5 is located in the first directions Z of the second article W2. Thus, an end surface of the second article W2 moving in the first directions Z contacts the tip of the second finger 5. Consequently, only the first article W1 is drawn to the gap between the first finger 3 and the second finger 5, and the second article W2 is not drawn to the gap between the first finger 3 and the second finger 5.

Articles W, such as both the first article W1 and the second article W2, can also be drawn to the gap between the first finger 3 and the second finger 5 by adjusting the distance between the first finger 3 and the second finger 5.

Thereafter, the hand 2 operates the opening/closing actuator 6 to close the second finger 5 as illustrated in FIG. 19. The second finger 5 moves toward the first finger 3 in the opening/closing directions X, and the first finger 3 and the second finger 5 grip the first article W1. In this manner, the drawing gripping is completed.

After the drawing gripping has been completed, the robot arm 1 moves the hand 2 to take the first article W1 from the tray T.

In the manner described above, even an article W only one of whose two surfaces to be gripped between the first finger 3 and the second finger 5 is exposed to the outside can be moved together with the belt 35 by driving the belt 35 in a state where the surface exposed to the outside, such as the outermost surface f1, is in contact with the belt 35 of the first finger 3.

In the example of the tray T described above, the hand 2 draws the article W to the gap between the first finger 3 and the second finger 5, but the moving direction of the article W is not limited to this example. For example, depending on circumstances surrounding the article W, the belt 35 may be moved to a side opposite to the direction in which the article W is drawn, to feed out the article W. After the article W has been fed out, the hand 2 may move to grip the article W with the first finger 3 and the second finger 5 or another hand or another device may grip the article W.

Although the articles W are arranged horizontally in this example, the technique disclosed here is not limited to this example. For example, even in a case where the articles W are stacked vertically, the hand 2 can grip the article W by drawing gripping. For example, the hand 2 is moved such that the first finger 3 contacts an upward exposed surface of the uppermost one of the articles W stacked vertically. That is, the posture of the hand 2 is adjusted such that the first directions Z are oriented horizontally. The subsequent action of the hand 2 are as described above. The uppermost article W is drawn to the gap between the first finger 3 and the second finger 5 horizontally, and then gripped with the first finger 3 and the second finger 5.

### [Drawing]

Next, simple drawing of an article W by the first finger 3 will be described. FIG. 20 is an illustration for describing an example of drawing of an article W by the hand 2. For example, an article W is placed on a shelf S. In this example, the article W is a book.

The hand 2 is in a state where the first finger 3 projects relative to the second finger 5 in the first directions Z by a predetermined distance and the first finger 3 and the second finger 5 are open in the opening/closing directions X beforehand. In this state, the hand 2 is moved to a position at which the first finger 3 enters a gap between the shelf S and the article W and the contact surface 35a of the first finger 3 contacts an end surface of the article W. The second finger 5 is not in contact with the article W.

The hand 2 operates the advance/retract actuator 4 to drive the belt 35. Since the lock 7 is in the locked state, the advance/retract actuator 4 performs the moving function. When the belt 35 is driven, the portion of the belt 35 defining the contact surface 35a moves in the in-plane directions of the contact surface 35a. Specifically, the side to which the electric motor 42 rotates is set such that the portion of the belt 35 defining the contact surface 35a approaches the hand body 20 in the first directions Z. Accordingly, the article W in contact with the belt 35 also moves in the first directions Z toward the hand body 20 together with the belt 35. Consequently, the article W is drawn from the shelf S toward the hand body 20.

After the article W has been drawn from the shelf S, the hand 2 causes the tips of the first finger 3 and the second finger 5 to substantially coincide with each other in the first directions Z, and a drawn portion of the article W is gripped with the first finger 3 and the second finger 5.

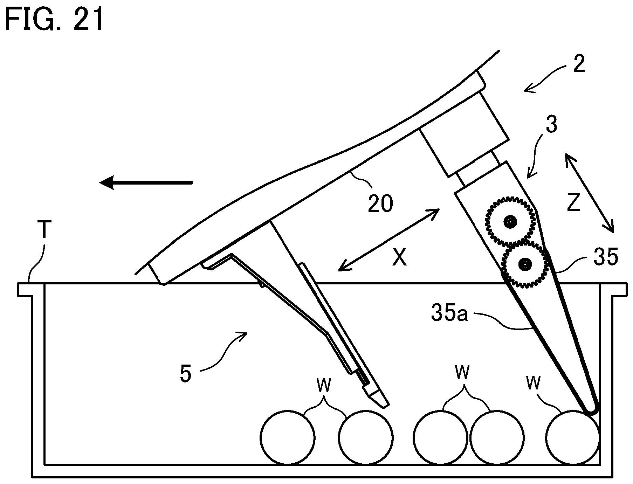

Next, another example of simple drawing of an article W by the first finger 3 will be described. FIG. 21 is an illustration for describing another example of drawing of an article W by the hand 2. For example, an article W is placed on a tray T. In this example, the article W placed near a side wall of the tray T is moved toward a center by drawing of the hand 2.

The hand 2 is in a state where the first finger 3 projects relative to the second finger 5 in the first directions Z by a predetermined distance and the first finger 3 and the second finger 5 are open in the opening/closing directions X beforehand. In addition, the hand 2 is set in a posture in which the first directions Z tilt relative to the vertical directions. In this state, the hand 2 is moved to a position at which the tip of the first finger 3 approaches a side wall of the tray T.

The hand 2 is moved toward the center of the tray T in a state where the belt 35 at the tip of the first finger 3 is in contact with the article W. Accordingly, the article W in contact with the first finger 3 is moved toward the center of the tray T together with the first finger 3. At this time, the hand 2 may operate the advance/retract actuator 4. The advance/retract actuator 4 moves the belt 35 in a direction in which the article W moves toward the center of the tray T. In addition to movement of the first finger 3, movement of the belt 35 facilitates movement of the article W toward the center of the tray T. Movement of the hand 2 continues until the article W is separated from a side wall of the tray T, and a space, such as a space the first finger 3 can enter, is obtained between the article W and the side wall of the tray T.

After the space has been obtained between the article W and the side wall of the tray T, the hand 2 causes the tips of the first finger 3 and the second finger 5 to substantially coincide with each other in the first directions Z and grips the article W with the first finger 3 and the second finger 5.

As described above, in the hand 2, since the first finger 3 including the belt 35 advances and retracts in the first directions Z, the range of use of the belt 35 is enlarged to thereby enhance usability of the first finger 3. For example, by positioning the first finger 3 to project relative to the second finger 5 in the first directions Z, the first finger 3 can easily reach the article even in circumstances where the space surrounding the article is narrow. By driving the belt 35 with the belt 35 of the first finger 3 in contact with an article, the article can be moved together with the belt 35. That is, the article can be moved without being gripped with the first finger 3 and the second finger 5. Then, after the article has been moved to an appropriate place, the article can be gripped with the first finger 3 and the second finger 5.

The aspect of moving an article by the belt 35 of the first finger 3 includes the aspect of drawing the article into a gap between first finger 3 and the second finger 5 as described above, the aspect of simply drawing the aspect toward the hand body 20, and the aspect of moving the article by driving the belt 35 while moving the entire first finger 3, for example.

In addition, movement of an article by the belt 35 and gripping with the first finger 3 and the second finger 5 can be combined. For example, as described above, an article may be gripped with the first finger 3 and the second finger 5 after the article has been drawn to a gap between the first finger 3 and the second finger 5 by the belt 35. The article may be moved between the first finger 3 and the second finger 5 by the belt 35 from the state where the article is gripped with the first finger 3 and the second finger 5.

In the manner described above, by enabling the first finger 3 to advance and retract in the first directions Z independently of the second finger 5, the position of the first finger 3 in the first directions Z relative to the second finger 5 can be adjusted. This enlarges the range of use of the first finger 3 including the belt 35.

The hand 2 and the belt 35 use the same driving source for advancing and retracting the first finger 3 in the first directions Z. That is, the advance/retract actuator 4 drives the belt 35 to selectively use movement of the belt 35 for advancing or retracting the first finger 3 and movement of an article. Accordingly, reduction of the number of parts of the hand 2, simplification of the configuration, and cost reduction are achieved.

Specifically, the hand 2 includes the lock 7 that locks movement of the first finger 3 in the first directions Z, the first finger 3 is switched between the locked state and the unlocked state by the lock 7 so that the belt 35 is thereby switched between the advancing/retracting function and the moving function. The use of the lock 7 can achieve both advancing/retracting the first finger 3 and movement of an article by using the common advance/retract actuator 4.

Further, in the case of advancing or retracting the first finger 3, the advance/retract actuator 4 drives the belt 35 with the lock 7 set in the unlocked state and the belt 35 in contact with another object. By driving the belt 35 with the belt 35 in contact with a fixed object, the first finger 3 moves in the first directions Z toward the object. The hand 2 uses the second finger 5 as the object to contact the belt 35. Since the second finger 5 is movable in the opening/closing directions X, in advancing or retracting the first finger 3, the hand 2 fully closes the first finger 3 and the second finger 5 such that the second finger 5 contacts the belt 35 of the first finger 3. Since the second finger 5 can neither advance nor retract in the first directions Z, the belt 35 is driven while being in contact with the second finger 5 so that the first finger 3 advances or retracts in the first directions Z. This eliminates the necessity of moving the hand 2 such that the belt 35 contacts a fixed object. By using the second finger 5 included in the hand 2 inherently used for gripping an article, the first finger 3 can easily advance and retract.

The hand 2 switches the lock 7 between the locked state and the unlocked state by the opening/closing action of the second finger 5. Specifically, the mover 61 that moves in conjunction with opening and closing of the second finger 5 switches the lock 7 between the locked state and the unlocked state. This eliminates the necessity of using another driving source for switching the lock 7 between the locked state and the unlocked state. That is, the lock 7 is switched between the locked state and the unlocked state by using a driving force of the opening/closing actuator 6.

Further, by switching the lock 7 by the opening/closing action of the second finger 5, the timing of switching the lock 7 matches the timing of opening/closing the second finger 5. For example, in the case of using the second finger 5 as another object to contact the belt 35 in order to advance or retract the first finger 3, it is necessary to fully close the second finger 5 and set the lock 7 in the unlocked state. For example, such situations can be easily obtained by switching the lock 7 by the opening/closing action of the second finger 5.

In addition, the opening/closing actuator 6 that drives the second finger 5 includes the mover 61 that is driven in the opening/closing directions X, and the second spring 63 elastically coupling the mover 61 and the second finger 5 to each other, and further moves the mover 61 from the fully closed state of the first finger 3 and the second finger against an elastic force of the second spring 63 so that the mover 61 thereby switches the lock 7 from the locked state to the unlocked state.

That is, the mover 61 has the function of moving each of the second finger 5 and the stopper 71. By coupling the mover 61 and the second finger 5 through the second spring 63, the mover 61 can be further moved after the first finger 3 and the second finger 5 have become the fully closed state. While the second finger 5 is not in contact with the first finger 3, the mover 61 moves only the second finger 5 and does not move the stopper 71. When the second finger 5 contacts the first finger 3, the second finger 5 stops and only the mover 61 moves. While the mover 61 moves with the second finger 5 stopped, the mover 61 moves the stopper 71. That is, in a further movement section of the mover 61 after the second finger 5 has contacted the first finger 3, the mover 61 switches the lock 7 to the unlocked state.

In the manner described above, when the first finger 3 and the second finger 5 are fully closed, the lock 7 is switched between the locked state and the unlocked state depending on the position of the mover 61. At the time when the first finger 3 and the second finger 5 are fully closed, the lock 7 remains in the locked state. Accordingly, it is possible to prevent the lock 7 from entering the unlocked state when the first finger 3 and the second finger 5 grip an object in a nearly fully closed state such as a case where the first finger 3 and the second finger 5 grip a thin sheet-like object. Specifically, the opening/closing actuator 6 moves the mover 61 to a position at which the second finger 5 contacts the first finger 3 and the mover 61 does not contact the stopper 71. Accordingly, the first finger 3 and the second finger 5 are fully closed while maintaining the lock 7 in the locked state. On the other hand, the opening/closing actuator 6 moves the mover 61 to a position at which the second finger 5 contacts the first finger 3 and the mover 61 pushes the stopper 71 to the second position. Accordingly, the lock 7 enters the unlocked state when the first finger 3 and the second finger 5 are fully closed. In this manner, the opening/closing actuator 6 can appropriately switch the lock 7 between the locked state and the unlocked state depending on the position of the mover 61 when the first finger 3 and the second finger 5 are fully closed.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the hand 2 may not be coupled to the robot arm 1. The hand 2 may be applied not only to the robot 110 but also to dedicated machines and the like.

The hand 2 may include another finger instead of the second finger 5. The hand 2 may include three or more fingers. That is, it is sufficient for the hand 2 to include a finger that advances and retracts relative to the hand body independently of other fingers.

It is sufficient that at least one of the first finger 3 or the second finger 5 is movable in the second directions X. For example, the first finger 3 may be disposed to the hand body 20 to be movable in the second directions X with the second finger 5 disposed to the hand body 20 to be immovable in the second directions X. Alternatively, both the first finger 3 and the second finger 5 may be disposed to the hand body 20 to be movable in the second directions X. In a case where the first finger 3 is movable in the second directions X, the opening/closing actuator 6 may move the first finger 3 in the second directions X relative to the hand body 20 in conjunction with the second finger 5 or independently of the second finger 5.

A finger other than the first finger 3, such as the second finger 5, may be disposed to the hand body 20 to be advanceable or retractable in the first directions Z. For example, all the fingers of the hand 2 can advance and retract in the first directions Z. In this case, it is sufficient that at least one of the fingers with the belts can advance and retract in the first directions Z independently of the other fingers.

A finger other than the first finger 3, such as the second finger 5, may include a belt defining a contact surface that contacts an article.

The advance/retract actuator that advances and retracts the first finger 3 is not limited to the actuator that drives the belt 35 and advances and retracts the first finger 3 by movement of the belt 35. The advance/retract actuator may be a different member from an actuator that drives the belt 35. For example, the advance/retract actuator may be, for example, a linear actuator that advances and retracts the first finger 3.

As described above, in the configuration in which the first finger 3 is advanced or retracted by using movement of the belt 35, another object that contacts the belt 35 is not limited to the second finger 5. For example, the first finger 3 may be advanced or retracted by driving the belt 35 with the belt 35 in contact with a support base supporting an article or a fixed object such as a tray.

The first finger 3 may move to a position at which the tip of the first finger 3 is retracted from the tip of the second finger 5 in the first directions Z.

The lock 7 is not limited to the configuration described above. Switching of the lock 7 between the locked state and the unlocked state may be performed by an actuator other than the opening/closing actuator 6. For example, the hand 2 may include a dedicated actuator for switching the state of the lock 7.

The timing at which the lock 7 is switched from the locked state to the unlocked state can be set at any timing. The timing of switching to the unlocked state may be a time when the first finger 3 and the second finger 5 are fully closed. Alternatively, the lock 7 may be switched to the unlocked state at any timing when the first finger 3 and the second finger 5 are open. The timing of switching the lock 7 from the locked state to the unlocked state can be set at any timing by changing a positional relationship between the mover 61 and the lever 76 in the above-described configuration of the opening/closing actuator 6. In the configuration in which the state of the lock 7 is switched by the dedicated actuator, the state of the lock 7 can be switched at any timing.

Application of the first finger 3 is not limited to the example described above. The first finger 3 can be used in various situations solely or in cooperation with other fingers such as the second finger 5. For example, in the gripping action, the tip of the first finger 3 and the tip of the second finger 5 may not be aligned in the first directions Z. In the moving action, the tip of the first finger 3 and the tip of the second finger 5 may be aligned in the first directions Z.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

The techniques of the present disclosure described above are summarized as follows.
[1] A hand 2 includes: a hand body 20; a first finger 3 disposed to the hand body 20; a second finger 5 disposed to the hand body 20; and an advance/retract actuator 4 that advances and retracts the first finger 3 in predetermined first directions Z relative to the hand body independently of the second finger 5, and the first finger 3 includes a belt 35 defining a contact surface 35a to contact an article and movable in in-plane directions of the contact surface 35a.

In this configuration, the first finger 3 is advanced or retracted in the first directions Z independently of the second finger 5 so that the tip of the tip of the first finger 3 and the tip of the second finger 5 can be aligned or displaced in the first directions Z. For example, in a case where the space around an article is narrow or a case where an article is treated only by the belt 35 of the first finger 3, the first finger 3 can easily reach the article by projecting the first finger 3 relative to the second finger 5 in the first directions Z. Alternatively, in a case where an article is treated with the first finger 3 and the second finger 5, for example, the tip of the first finger 3 and the tip of the second finger 5 are aligned so that an action can be thereby easily applied to the article by the belt 35 while the article is gripped with the first finger 3 and the second finger 5. In this manner, the position of the first finger 3 relative to the second finger 5 in the first directions Z can be changed depending on circumstances surrounding the article and the way of treating the article by the hand 2. By changing the position of the first finger 3 in the first directions Z, the article can be appropriately and easily treated by the hand 2. As a result, the first finger 3 including the belt 35 can be more effectively used, and usability of the first finger 3 can be enhanced.

[2] In the hand 2 of [1], the advance/retract actuator 4 drives the belt 35 such that the belt 35 moves in the in-plane directions of the contact surface 35a.

In this configuration, specifically, the advance/retract actuator 4 drives the belt 35 to thereby advance and retract the first finger 3 in the first directions Z.

[3] The hand 2 of [1] or [2] further includes a lock 7 that switches the first finger 3 between a locked state where the first finger 3 is immovable in the first directions Z and an unlocked state where the first finger 3 is movable in the first directions Z.

In this configuration, the first finger 3 is switched by the lock 7 between a movable state in the first directions Z and an immovable state.

[4] In the hand 2 of any one of [1] to [3], the advance/retract actuator 4 advances and retracts the first finger 3 in the first directions Z by driving the belt 35 with the lock 7 in the unlocked state and the belt 35 in contact with another object, and moves the article in the in-plane directions of the contact surface 35a by driving the belt 35 with the lock 7 in the locked state and the belt 35 in contact with the article.

In this configuration, the advance/retract actuator 4 switches the lock 7 between the unlocked state and the locked state to thereby switch the first finger 3 between an advancing/retracting function of advancing/retracting the first finger 3 and a moving function of moving an article.

[5] In the hand of any one of [1] to [4], the another object is the second finger 5.

In this configuration, the advance/retract actuator 4 can easily advance and retract the first finger 3 by using the second finger 5. That is, it is unnecessary to select another object to contact the first finger 3 at each time in order to advance or retract the first finger 3.

[6] The hand 2 of any one of [1] to [5] further includes: an opening/closing actuator 6 that moves at least one of the first finger 3 or the second finger 5 in predetermined second directions X relative to the hand body 20 such that the at least one of the first finger 3 or the second finger 5 moves toward or away from another one of first finger 3 or the second finger 5, the lock 7 includes a stopper 71 movable between a first position at which the stopper 71 locks the first finger 3 and a second position at which the stopper 71 unlocks the first finger 3, and a first spring 72 (first elastic structure) that biases the stopper 71 from the second position toward the first position, and in moving at least one of the first finger 3 or the second finger 5 in the second directions X toward or away from another one of the first finger 3 or the second finger 5, the opening/closing actuator 6 moves the stopper 71 from the first position to the second position against an elastic force of a first spring 72, thereby setting the lock 7 in the unlocked state.

In this configuration, the lock 7 can be set in the unlocked state when the first finger 3 and the second finger 5 are closed.

[7] In the hand 2 of any one of [1] to [6], the opening/closing actuator 6 sets the lock 7 in the unlocked state when the first finger 3 and the second finger 5 are fully closed.

In this configuration, the lock 7 enters the unlocked state specifically when the first finger 3 and the second finger 5 reach a fully closed state in closing motion thereof. While the first finger 3 and the second finger 5 are fully closed, the second finger 5 contacts the belt 35 of the first finger 3. In this state, the belt 35 is driven so that the first finger 3 is thereby advanced or retracted in the first directions Z. That is, by setting the first finger 3 and the second finger 5 in the fully closed state, both the state where the belt 35 contacts the second finger 5 and the unlocked state of the lock 7 are achieved, and as a result, the first finger 3 can be advanced and retracted in the first directions Z.

[8] In the hand 2 of any one of [1] to [7], the opening/closing actuator 6 includes a mover 61, a second spring 63 (second elastic structure) elastically coupling the mover 61 and the second finger 5 to each other, and an electric motor 62 (driving source) that moves the mover 61, moves the mover 61 by the electric motor 62 to thereby move the second finger 5 in the second directions X, and further moves the mover 61 against an elastic force of the second elastic structure after bringing the second finger 5 into contact with the first finger 3 to thereby cause the mover 61 to move the stopper from the first position to the second position against an elastic force of the first elastic structure and set the lock 7 in the unlocked state.

In this configuration, the lock 7 enters the unlocked state especially when the mover 61 further moves while elastically deforming the second spring 63 after the second finger 5 has contacted the first finger in the fully closed state of the first finger 3 and the second finger 5. That is, by coupling the mover 61 and the second finger 5 through the second spring 63, the mover 61 can be made movable even after the second finger 5 has contacted the first finger 3, and the timing when the stopper 71 moves to the second position is delayed relative to the timing when the second finger 5 has contacted the first finger 3. Accordingly, the lock 7 can be switched between the unlocked state and the locked state in the fully closed state of the first finger 3 and the second finger 5, depending on the position of the mover 61. For example, in a case where the hand 2 grips a very thin object, when the lock 7 enters the unlocked state with the first finger 3 and the second finger 5 gripping an article, the gripping of the article might be unstable. However, even when the first finger 3 and the second finger 5 are in a substantially fully closed state, the lock 7 does not enter the unlocked state at some position of the mover 61. That is, it is possible to prevent the lock 7 from entering the unlocked state immediately after the first finger 3 and the second finger 5 have entered the fully closed state. Thus, the state where the article is gripped with the first finger 3 and the second finger 5 can be appropriately maintained.

[9] In the hand 2 of any one of [1] to [8], the lock 7 further includes a lever 7 coupled to the stopper 71 and located on a movement trajectory of the mover 61, and the mover 61 pushes the lever 76 when the mover 61 brings the second finger 5 into contact with the first finger 3 and then further moves against an elastic force of the second spring 63, to thereby move the stopper 71 from the first position toward the second position against an elastic force of the first spring 72 and set the lock 7 in the unlocked state.

In this configuration, the moving mover 61 pushes the lever 76, and the stopper 71 coupled to the lever 76 moves from the first position to the second position so that the lock 7 thereby enters the unlocked state. Here, the position of the lever 76 is set such that when the mover 61 further moves after the mover 61 has brought the second finger 5 into contact with the first finger 3, the stopper 71 moves from the first position toward the second position. Accordingly, a configuration in which the lock 7 enters the unlocked state when the mover 61 further moves after the first finger 3 and the second finger 5 have entered the fully closed state.

[10] The hand 2 of any one of [1] to [9] further includes a buffer 8 that elastically supports the first finger 3 such that the first finger 3 is movable in the first directions Z relative to the hand body 20.

In this configuration, even when an impact is applied to the first finger 3 in the first directions Z, the buffer 8 can absorb the impact. For example, even in a case where the hand 2 moves so that the first finger 3 thereby contacts another object in the first directions Z, the buffer 8 can absorb an impact exerted on the first finger 3 from the object.

[11] In the hand 2 of any one of [1] to [10], the buffer 8 includes linear guides 82 that guides the first finger 3 in the first directions Z, and a third spring 83 (third elastic structure) that elastically absorbs movement of the first finger 3 in the first directions Z.

In this configuration, the first finger 3 is elastically movable in the first directions Z by the linear guides 82 and the third spring 83. When an impact is exerted on the first finger 3, the first finger 3 is guided by the linear guides 82 and moves in the first directions Z, and an impact is absorbed by the third spring.

[12] In the hand 2 of any one of [1] to [11], the advance/retract actuator 4 includes an electric motor 42, the first finger 3 and the electric motor 42 are arranged in the first directions Z, the electric motor 42 is located such that a rotation axis M of the electric motor 42 extends in the first directions Z, and the third spring 83 is a coil spring surrounding an outer periphery of the electric motor 42.

In this configuration, since the third spring 83 surrounds the outer periphery of the electric motor 42, the buffer 8 can be placed compactly. As a result, the size of the hand 2 can be reduced.

## Claims

1. A hand comprising:
a hand body;
a first finger disposed to the hand body;
a second finger disposed to the hand body; and
an advance/retract actuator that advances and retracts the first finger in predetermined first directions relative to the hand body independently of the second finger, wherein
the first finger includes a belt defining a contact surface to contact an article and movable in in-plane directions of the contact surface.

2. The hand according to claim 1, wherein
the advance/retract actuator drives the belt such that the belt moves in the in-plane directions of the contact surface.

3. The hand according to claim 2, further comprising
a lock that switches the first finger between a locked state in which the first finger is immovable in the first directions and an unlocked state where the first finger is movable in the first directions.

4. The hand according to claim 3, wherein
the advance/retract actuator
advances and retracts the first finger in the first directions by driving the belt with the lock in the unlocked state and the belt in contact with another object, and
moves the article in the in-plane directions of the contact surface by driving the belt with the lock in the locked state and the belt in contact with the article.

5. The hand according to claim 4, wherein
the another object is the second finger.

6. The hand according to any one of claims 3 to 5, further comprising
an opening/closing actuator that moves at least one of the first finger or the second finger in predetermined second directions relative to the hand body such that the at least one of the first finger or the second finger moves toward or away from another one of the first finger or the second finger, wherein
the lock includes a stopper movable between a first position at which the stopper locks the first finger and a second position at which the stopper unlocks the first finger, and a first elastic structure that biases the stopper from the second position toward the first position, and
in moving at least one of the first finger or the second finger in the second directions toward or away from another one of the first finger or the second finger, the opening/closing actuator moves the stopper from the first position to the second position against an elastic force of the first elastic structure, thereby setting the lock in the unlocked state.

7. The hand according to claim 6, wherein
the opening/closing actuator sets the lock in the unlocked state when the first finger and the second finger are fully closed.

8. The hand according to claim 7, wherein
the opening/closing actuator
includes a mover, a second elastic structure elastically coupling the mover and the second finger to each other, and a driving source that moves the mover,
moves the mover by the driving source to thereby move the second finger in the second directions, and
further moves the mover against an elastic force of the second elastic structure after bringing the second finger into contact with the first finger to thereby cause the mover to move the stopper from the first position to the second position against an elastic force of the first elastic structure and set the lock in the unlocked state.

9. The hand according to claim 8, wherein
the lock further includes a lever coupled to the stopper and located on a movement trajectory of the mover, and
the mover pushes the lever when the mover brings the second finger into contact with the first finger and then further moves against an elastic force of the second elastic structure, to thereby move the stopper from the first position toward the second position against an elastic force of the first elastic structure and set the lock in the unlocked state.

10. The hand according to claim 1, further comprising
a buffer that elastically supports the first finger such that the first finger is movable in the first direction relative to the hand body.

11. The hand according to claim 10, wherein
the buffer includes a linear guide that guides the first finger in the first direction, and a third elastic structure that elastically absorbs movement of the first finger in the first directions.

12. The hand according to claim 11, wherein
the advance/retract actuator includes an electric motor,
the first finger and the electric motor are arranged in the first direction,
the electric motor is located such that a rotation axis of the electric motor extends in the first directions, and
the third elastic structure is a coil spring surrounding an outer periphery of the electric motor.
